Europäisches Patentamt

European Patent Office

Office européen des brevets

(19)

(11) **EP 1 408 434 A1**

(12) **EUROPEAN PATENT APPLICATION**
published in accordance with Art. 158(3) EPC

| | |
|---|---|
| (43) Date of publication:<br>**14.04.2004 Bulletin 2004/16** | (51) Int Cl.[7]: **G06F 17/60** |
| (21) Application number: **02705465.9** | (86) International application number:<br>**PCT/JP2002/002816** |
| (22) Date of filing: **22.03.2002** | (87) International publication number:<br>**WO 2003/003268 (09.01.2003 Gazette 2003/02)** |

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **NOMURA, Naoyuki**<br>**Kita-ku, Tokyo 114-0003 (JP)**<br>• **AKAI, Yasuko**<br>**Asaka-shi, Saitama 351-0025 (JP)**<br>• **DOJO, Kenshin**<br>**Shinagawa-ku, Tokyo 140-0001 (JP)** |
| (30) Priority: **27.06.2001 JP 2001195596** | |
| (71) Applicant: **Dojo, Makoto**<br>**Minato-ku, Tokyo 108-0022 (JP)** | (74) Representative: **Jenkins, Peter David et al**<br>**PAGE WHITE & FARRER**<br>**54 Doughty Street**<br>**London WC1N 2LS (GB)** |
| (72) Inventors:<br>• **DOJO, Makoto**<br>**Minato-ku, Tokyo 108-0022 (JP)** | |

(54) **TRANSACTIONAL LIMITATION SOLVING DEVICE**

(57)     Diverse constraint elements which are such that buy or sell orders could not be placed in the electronic marketplace in the past are settled all at once, so that transactions of different types and attributes can be handled in the same market; and the possibility of transactors such as buyers and sellers being able to reach an agreement with transaction partners is greatly increased, so that transactions in the electronic marketplace are greatly promoted. In order to accomplish this, the contents of constraints involved in transactions, the value types for degree of settlement of constraints, and the constraint strengths, etc. are defined; and order data received in accordance with these definitions is processed on the basis of the values for degree of settlement and constraint strengths, so that one or more constraints are settled, and agreements are reached.

**FIG. 1**

**Description**

Technical Field

The present invention relates to a transaction constraint settling device which can settle one or more constraints regarding transactions in the electronic marketplace, a data structure which is used to settle these one or more constraints, and a transaction constraint settlement supporting device and transaction constraint settling system using this data structure.

Background Art

Recently, with the development of computers and communications systems typified by the Internet, transactions called "net auctions", etc., which are conducted via communications circuits utilizing the information properties and real time properties of the Internet have attracted attention. Such systems may conceivably include ordinary auction systems in which a plurality of buyers utilize the Internet to submit buy prices for a single product or service, and the buyer who has submitted the highest price can purchase the product or service, reverse auction systems in which a plurality of sellers utilize the Internet to submit sell prices regarding the desire to buy a single product or service, and the seller who has submitted the lowest price can sell the product or service, and various types of systems involving variations of such systems.

All of these transactions have a form in which the final partners to the agreement are determined by the level of the price for a given product or service. In other words, it can be said that transactions performed utilizing computers or the Internet are arranged so that a single constraint of "price" is settled when the transaction partners reach an agreement.

However, if actual commercial transactions are considered, transactions of a form in which only a single constraint is to be settled are rare; there are numerous constraints involving price, quantity, time, place, quality and account settlement, etc. Furthermore, for example, in respective constraints regarding total price and unit price in the case of price, or respective constraints regarding color and size in the case of quality, etc., constraints that might be called "attributes" are usually appended, and constraints can be closely related to each other (e.g., unit prices may fluctuate according to the transaction quantity and delivery date, etc.), so that the constraints are determined in relative terms. Accordingly, in the case of the above-described auction systems, etc., diverse transactions cannot be settled at one time, and goods and services of different types and attributes cannot currently be placed on the same market, so that the handling of such transactions as buy and sell orders in the so-called electronic marketplace is impossible as an actual task. Of course, it goes without saying that the settlement of diverse constraints in person is conspicuously difficult. For such reasons, the possibility of buyers and sellers reaching agreements with transaction partners unavoidably remains at a low level.

Disclosure of Invention

Accordingly, the object of the present invention is to make it possible to settle at one time diverse constraints that could not be placed as buy and sell orders in the electronic marketplace, so that transactions of different types and attributes can be handled in the same market, and to greatly increase the possibility of transactors such as buyers and sellers concluding agreements with transaction partners, so that transactions in the electronic marketplace are greatly promoted.

More specifically, in order to settle one or more constraints involved in transactions in the electronic marketplace, the transaction constraint settling device of the present invention is characterized in that it comprises a constraint element storage section which respectively defines and stores one or more constraint elements that are to be settled, an agreement type storage section which defines and stores (as attributes of each constraint element) the value types for degree of settlement of respective constraint elements in cases where sell order data and buy order data received in accordance with the above-described defined constrain elements have tentatively been agreed upon, an agreement level storage section which defines and stores (as attributes of each constraint element) the strengths of constraints in cases where settlement processing is performed on the basis of the designated value type for degree of settlement, an order data receiving section which receives sell order data and buy order data involved in transactions in accordance with the above-described constraint elements, and an order data output section which outputs the sell order data and buy order data received by the above-described order data receiving section to a settlement processing section which performs processing that settles one or more constraints on the basis of the respective stored value types involved in the degree of settlement and the strengths of the constraints stored in the above-described agreement level storage section.

In other words, the definitions of one or a plurality of constraint elements to be resolved in transactions, value types which indicate the degree of settlement of constraint elements in cases where tentative agreements have been reached for sell order data and buy order data, and the strengths of settlements corresponding to the value types for degree of settlement are defined and stored beforehand, and buy and sell order data received in accordance with the defined constraint elements is output to the settlement processing section, so that the respective constraints are settled in the settlement processing section on the basis of the defined value types for the degree of settlement and the settlement strengths. Accordingly, if the degree of settlement is converted into numerical values by a specified system for each constraint element, and if strengths are assigned to the types of numerical values and the constraint elements are settled in accordance with these numerical values, complicated buy and sell orders containing diverse constraint elements in transactions, which could not be handled in the past, can be handled so that the possibility of an agreement being reached regarding sell order data and buy order data is greatly increased.

In the above, the constraint elements stored in the constraint element storage section, the value types for degree of settlement stored in the agreement type storage section, and the constraint strengths stored in the agreement level storage section, etc., can be defined using XML schema or database schema definitions, or an independent language based on a programming language, etc.

Furthermore, in regard to the concrete processing used to settle constraint elements in accordance with the above-described value types for degree of settlement and strengths of constraints, any system, e.g., a system which causes agreements to be reached by matching buying and selling transaction prices, such as a general auction system or so-called reverse auction system, etc., or a system which causes agreements to be reached at submitted prices even if the two prices do not match, etc., can be used, as long as this system establishes transactions in which buyers and sellers are present. Furthermore, the system can be devised so that some of or all of the conditions, i.e., constraint elements, submitted by the buyers and sellers are disclosed, or so that none of these conditions is disclosed.

In concrete terms, if either multi-value or binary settlement degree values are adopted, the value types for degree of settlement can be expressed by converting the degree of settlement for the constraint elements into points, or can be expressed in terms of "settled" or "not settled". Accordingly, the conditions of settlement can be easily grasped.

Furthermore, in regard to the strengths of the constraints, it can be said that devising the system so that attribute values of either constraint level values designated as strong constraints expressing the fact that these constraints are absolutely to be settled, or constraint level values designated as best effort constraints expressing desirable constraints that "should be settled as far as possible", results in a better correspondence with actual transactions.

In particular, in cases where at least one constraint element has a specified width, there can be instances in which either the upper limit or lower limit of the width of the constraint is desirable for determining the value of the degree of settlement. In such cases, in order to make it possible to process the values for the degree of settlement as desirable values, it is preferable to define and store a directionality that indicates which of the values within the width of the constraint element is the value for the degree of settlement.

The system can be devised so that constraints are settled in accordance with the value types for degree of settlement and the strengths of the constraints, and the agreement result data constituting the results of the agreement are further stored. In this system, the grounds for actual transactions subsequently carried out between individual buyers and sellers that have reached an agreement can be clarified. Furthermore, the system can be devised so that order data for which constraints could not be settled so that an agreement was not reached is stored. In this system, such data can more easily be turned to the chance of subsequent transactions, and a contribution can also be made to agreements on numerous transactions.

Furthermore, since transactions involve various fee collection such as handling charges and taxes, and device use fees, etc., it is desirable that the system be devised so that fee collection information data which indicates information regarding fees that are to be collected when constraints are settled and agreements are concluded is stored.

Furthermore, the transaction constraint settling device of the present invention is characterized in that it comprises a constraint element accumulating section which accumulates the definitions of one or more constraint elements required for agreements involved in transactions in the electronic marketplace, a first storage section which stores buy order data and sell order data received using a special language for electronic commercial transactions specified by the definitions of constraint elements which have been described by a language that can distinguish and describe character data and added information that is added to this character data, and accumulated by the above-described constraint element accumulating section, an analysis section which analyzes the buy order data and sell order data stored by the first storage section in accordance with the definitions of the above-described constraint elements, and an agreement candidate generating section which generates candidates for reaching agreements in accordance with the definitions of the above-described constraint elements.

In this system, if a special language for electronic commercial transactions constructed by one or more defined and accumulated constraint elements is prepared, then buy and sell order data can subsequently be received and stored in accordance with this language. Furthermore, order data can be analyzed and candidates for causing agreements to be reached can be generated on the basis of the analysis of this language; accordingly, diverse and complicated constraints can be easily be settled so that it becomes easier to cause agreements to be reached on transactions.

Consequently, in the case of an electronic marketplace which has a common special language for electronic commercial transactions, even if agreement candidates are generated by different systems, a merit lacking in the past, namely the fact that buyers and sellers can put out orders, can be obtained. Furthermore, by defining constraints and accumulating these constraints, it is possible to shorten the development period of this type of device, so that a great reduction in cost can be achieved.

In particular, the special language for electronic commercial transactions can be formed as a language in which content models of elements that express the names of one or more elements comprised of tags and character data surrounded by tags, and the structures of these elements, are described using a language capable of describing these content models, and are specified by the definitions of constraint elements that are accumulated by the above-described constraint element accumulating section; furthermore, in regard to the definitions of constraint elements as well, content models of elements that express the names of one or more elements comprised of tags and character data surrounded by tags, and the structures of these elements, can similarly be described and accumulated using a language that is capable of describing these content models.

In the above system, it can be designed so that the constraint element accumulating section accumulate therein: at least one or more defined constraint elements that are to be settled, value types for degree of settlement for the respective constraint elements in cases where these have been defined as attributes of the respective constraint elements and tentative agreements have been reached regarding sell order data and buy order data received in accordance with each of the respective constraint elements, and strengths of the constraints that are defined as attributes of each of the respective constraint elements and that are used when settlement processing is performed on the basis of the above-described value types for degree of settlement. In this setting, the possibility of reaching agreements on transactions, and the number of agreements, can greatly increase as described above by settling the respective constraints on the basis of the above-described value types for degree of settlement and settlement strengths.

The definitions of constraint elements accumulated by the constraint element accumulating section and the order data stored by the first storage section can be accumulated and stored (with a clear distinction being made between the two) in the same memory region, or can be accumulated and stored in a mixed manner without a clear distinction being made in the same memory region. Alternatively, such two types of data are respectively stored in separate memory regions.

In order to efficiently narrow down the number of candidates and reduce the load of calculation processing in the pre-processing that generates agreement candidates, it is preferable to further provide in this transaction constraint settling device a constraint settlement order determining means that determines the order of settlement of constraint elements or attributes that are to be settled, among the one ore more constraint elements, one or more attributes contained in the constraint elements, or one or more constraint elements that contain one or more attributes.

In order to cause actual agreements to be reached regarding buy order data and sell order data generated as agreement candidates by the agreement candidate generating section, it is desirable to further provide a matching section which performs processing that causes agreements to be reached between one or more sets of buy order data and one or more sets of sell order data that constitute candidates, in accordance with the above-described defined constraint elements, and to devise the system so that at least the buy order data and sell order data for which agreements have been established by the matching section are stored in a second storage section. The system can also be designed so that data for which agreements were not established by the matching section is also stored in this second storage section. In this case as well, all types of systems, e.g., systems which cause agreements to be reached by matching the transaction prices of buyers and sellers such as general auction systems and so-called reverse auction systems, etc., or systems which cause agreements to be reached at respective submitted prices even if the prices of buyers and sellers do not match, etc., can be used.

Furthermore, if the system is set so that constraint elements that were used and constraint elements that were not used (among the constraint elements according to at least one type of processing among the processing of the agreement candidate generating section and the processing of the matching section) are stored with a distinction being made between these two types of constraint elements in the second storage section; then legal evidence that agreements were fairly reached can be clearly left.

Furthermore, it is also useful to provide a third storage section which stores fee collection information data indicative of information concerning fees that are to be collected when constraints are settled and agreements are reached on the basis of the processing of the matching section.

In particular, the system can be devised so that data received in a state in which respective consumers and providers who submitted buy order data and sell order data cannot learn of data submitted by other parties is stored in the first storage section. In this system, when the sellers or buyers submit orders adding respective constraints, these sellers or buyers do not know the conditions submitted by persons constituting competing transactors or transaction partners; accordingly, excessive competition can be prevented. Furthermore, the system can be designed so that constraint conditions submitted by the respective parties are not disclosed to other parties (except for constraints that are essential to actual transactions) even after agreements have been reached. In this system excessive and unfair competition can also be avoided in subsequent transactions. Furthermore, submitting suggestions such as past standard agreement prices or indications of the extent of negotiations from initially submitted constraints that will increase the possibility of reaching an agreement, etc., to respective transactors in order to facilitate the reaching of agreements between the respective parties is an effective means of increasing the number of agreements.

Generally, past common sense in commercial transactions has required that the agreement prices of buyers and sellers be matched; however, this is rather a cause of a decrease in the number of successfully established agreements. Accordingly, in order to overthrow this conventional common sense in transactions from the ground up and achieve a great increase in the number of successfully established agreements, it is preferable that agreements be caused to be reached for buy order data and sell order data even in cases where the price constituting one of the constraint elements contained in the buy order data and the price constituting one of the constraint elements contained in the sell order data do not agree in the matching section. If this is done, then agreements can be reached at the prices submitted by the buyers or sellers themselves, so that mutually agreeable transactions can be conducted. In this case, furthermore, it is desirable that the system be devised so that at least some of the constraints submitted by the respective parties are not disclosed to the other parties, in order to eliminate any feeling of unfairness.

A data structure that realizes such a transaction constraint settling device as described above can be provided by at least a first data section which stores, at least, definitions of one or more constraint elements required for agreements involved in transactions in the electronic marketplace, value types for degree of settlement of respective constraint elements, which is defined as attributes of each of the constraint elements, in cases where tentative agreements have been reached for sell order data and buy order data received in accordance with the constraint elements, and constraint strengths which are defined as attributes of each of the constraint elements and which are used when settlement processing is performed on the basis of the value types for degree of settlement; and such a first data section is constructed so that buy order data and sell order data received on the basis of the definitions of constraints, value types for degree of settlement and constraint strengths can be additionally stored; and in addition, the transaction constraint settling data structure further includes a second data section and/or a third data section that can be additionally provided, wherein the second data section stores agreement results for buy order data and sell order data for which agreements have been reached in accordance with degree of settlement of agreement type definition data, and settlement conditions of agreement level definition data in the first data section; and the third data section stores fee collection information regarding fees that are to be collected upon the agreements. With this construction, such data structure can be installed in the above-described transaction constraint settling device easily, so that the development period can be shortened and costs including personnel expenditures can be reduced. Furthermore, a similar logic can be realized in cases where the respective parts of this data structure are stored as independent files, or in cases where these parts are stored as independent records in a database.

When transactions such as B2B (business to business), B2C (business to consumer), C2C (consumer to consumer) or M2M (marketplace to marketplace), etc. are actually conducted using such a data structure, a transaction supporting device can be devised in which the addition of devices for performing agreement processing, etc., on the basis of information received from general consumers, dealers and market managers, etc., participating in the transactions is decreased and so that appropriate agreement processing can be performed. Such a transaction supporting device comprises: an order data read-in section which reads in at least sell order data or buy order data involved in transactions in the electronic marketplace; a definition data storage section which stores definition data comprised of the definitions of constraint elements, value types for degree of settlement and strengths of constraints in at least the first data section of the above-described transaction constraint settling data structure; and an order data output section which analyzes the order data read in by the order data read-in section on the basis of the definition data stored in the above-described definition data storage section and then outputs this data to the matching section which performs processing that causes agreements to be reached regarding the sell order data and buy order data. In this system, all of the data in the above-described transaction constraint settling data structure can be stored in the definition data storage section.

Furthermore, another transaction supporting device can be provided in which persons participating in transactions such as dealers, market managers and general consumers, etc., can easily register goods or services that are respectively provided or desired by these persons from a standardized interface, thus allowing subsequent agreement processing to be performed in a smooth manner. Such a transaction supporting device comprises: an interface generating section which generates a transaction receiving interface (for example, an interface for voice input or a screen displayed on a computer) used to receive the contents of transactions in the electronic marketplace; an interface output section which outputs the transaction receiving interface generated by the interface generating section; and a data conversion section which converts transaction content data inputted on the basis of the transaction receiving interface outputted by the interface output section into transaction content data files in accordance with the above-described definition data. In this device, constraint element definitions, value types for degree of settlement and strengths of constraints, etc., required for the analysis of the transaction content data can be also recorded in the transaction content data files together with the transaction content data; and information indicating positions on a network where such information required for the analysis of transaction content data is stored can be recorded together with the transaction content data.

Furthermore, the system of the present invention can be designed so as to profile dealers or consumers who are customers that have conducted transactions in the electronic marketplace in the past or that have repeatedly conducted such transactions, so that the participation of such persons in transactions is facilitated and so that market managers can easily edit customer information to facilitate the understanding of transaction trends. In this system, a customer profile storage section, which prepares and stores customer profile data for individual buyers or sellers who are customers involved in such transactions on the basis of the transaction data content received by the transaction receiving interface, and a default setting section, which sets default definition data for each customer (for some of or all of the above-described definition data) on the basis of the customer profile data stored in the customer profile storage section, are further provided; and a transaction receiving interface is generated on the basis of the definition data and default definition data.

Furthermore, the present invention provides a transaction supporting device in which buy-sell transactions for which agreements could not be reached in a certain electronic marketplace or transactions involving strong points or weak points are prepared as temporary profiles, and these profiles are shared among different electronic marketplaces, so that the number of transactions is increased and an M2M transaction market is used. Such a transaction supporting device comprises a transaction content data receiving section, which receives transaction content data for transactions in the electronic marketplace prepared on the basis of the constraint element definitions in at least the first data section of the above-described transaction constraint settling data structure, and a transaction content data storage section, which stores the transaction content data received by the transaction content data receiving section. In this system, the chance for transactors to reach agreements concerning their own agreements greatly improves.

Brief Description of Drawings

Figure 1 is a block diagram that shows the functional construction of a first embodiment of the present invention.
Figure 2 is an explanatory diagram that shows the data structure of buy order data in the first embodiment.
Figure 3 is a flow chart that shows a portion of the operation of the transaction constraint settling device in the first embodiment.
Figure 4 is an explanatory diagram that shows the structure of agreement result data and fee collection information data in the first embodiment.
Figure 5 is a block diagram that shows the functional construction of a second embodiment of the present invention.
Figure 6 is a flow chart that shows a portion of the operation of the transaction constraint settling device in the second embodiment.
Figure 7 is an explanatory diagram that shows a concrete example of the agreement process by the preparation of a two-part graph in the same embodiment.
Figure 8 is an explanatory diagram that shows a concrete example of the agreement process by the preparation of a two-part graph in the second embodiment.
Figure 9 is an explanatory diagram that shows a concrete example of the agreement results by the preparation of a two-part graph in the second embodiment.
Figure 10 is an explanatory diagram that shows another concrete example of the same agreement results.
Figure 11 is a block diagram that shows the functional construction of a third embodiment of the present invention.
Figure 12 is a block diagram that shows another functional construction in the third embodiment.
Figure 13 is a schematic explanatory diagram that shows the overall system in a fourth embodiment of the present invention.

Best Mode for Carrying Out the Invention

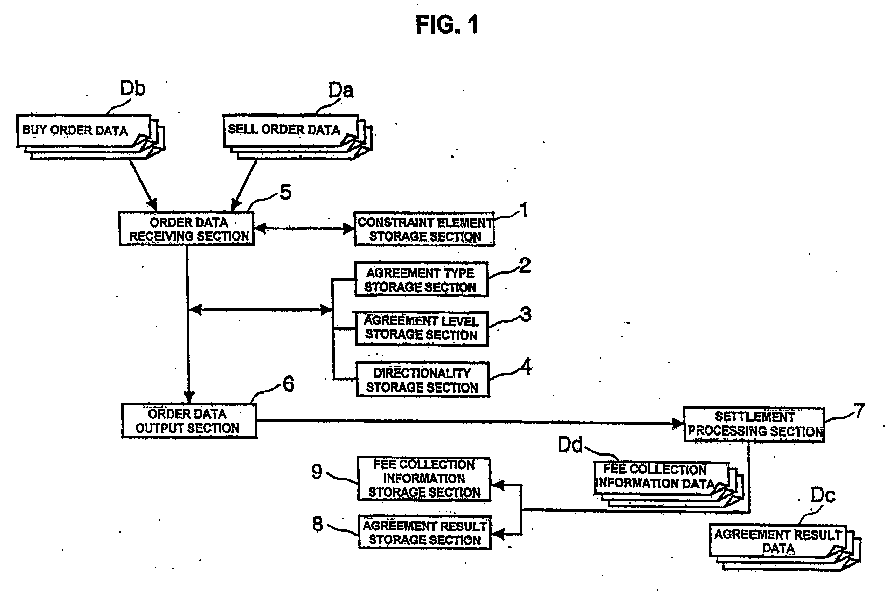

Below, embodiments of the present invention will be described with reference to the accompanying drawing. <First Embodiment> Figure 1 is a block diagram which shows the functional construction of the transaction constraint settling device in the first embodiment of the present invention. This transaction constraint settling device includes a constraint element storage section 1, an agreement type storage section 2, an agreement level storage section 3, a directionality storage section 4, an order data receiving section 5, an order data output section 6, an agreement result storage section 8, and a fee collection information storage section 9. The settlement processing section 7 can be included as a one functional part of this transaction constraint settling device, or the system can be devised so that this function is manifested by a separate device. Here, the constraint element storage section 1 stores the names and structures of constraint elements such as "price", "delivery date", "quantity", "quality of product or service", "location (of delivery or shipping, etc.)" and "method of settlement", etc., which are defined for goods and services involved in transactions in the electronic marketplace, in a schema. The agreement type storage section 2 stores value types for degree of settlement in cases where tentative agreements have been individually reached for sell order data and buy order data, these value types being defined as attributes for the above-described respective constraint elements, in a schema. The agreement level storage section 3 stores constraint strengths which are used for the settlement of constraints, and which are defined as constraint element attributes for each value type for the degree of settlement designated for the respective constraint elements, in a schema. The directionality storage section 4 provides definitions as to whether conditions close to the upper limit of the width or close to the lower limit of the width are desired in cases where buyers or sellers desire transactions under conditions that have some width with respect to a certain constraint, and stores these definitions as attributes of the constraint elements in a schema. Furthermore, in cases where a user interface comprised of a screen, etc., based on the constraints, value types for degree of settlement, constraint strengths and directionality, etc., defined and stored by these respective parts is displayed on computers used by buyers or sellers, the system is devised so that information that is input in accordance with this screen display is received by the order data receiving section 5 as sell order data Da and buy order data Db.

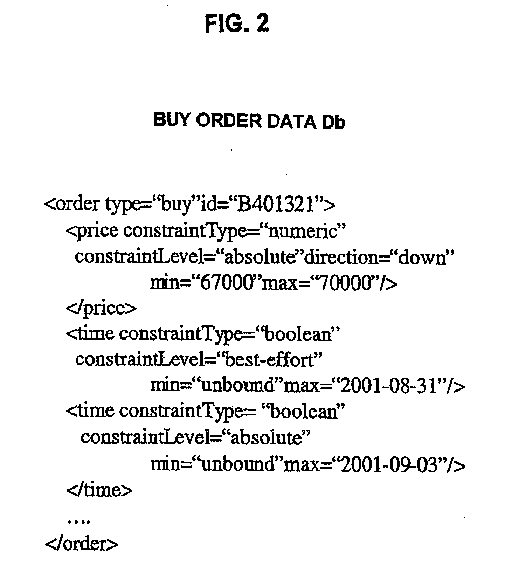

Here, Figure 2 shows one example of a portion of the data structure in buy order data Db. Figure 2 shows the case of a document in which the buy order data Db is described using XML (extensible Markup Language); in this case, a buyer for a certain product has submitted the following constraints: "want to buy cheaply within price range of 67,000 to 70,000 (monetary units such as yen or dollars, etc.), with delivery data by August 31, 20001 if possible, and absolutely by September 3, 2001". To describe this in greater detail on the basis of the same figure, the contents of such an order are described within the following element: <order type = ---- > ... </order>. Furthermore, the data structure within the <order> element is constructed from a <price> element which expresses the constraint of "price", and a <time> element which expresses the constraint of "delivery date". These constraint elements are based on the definitions of constraint elements that are stored in the constraint element storage section 1. Here, furthermore, only the two constraint elements of price and delivery date are indicated in order to simplify the description; however, other constraint elements can also be described within the <order> element.

First, the <price> element is constructed from a plurality of attributes, i.e., "value type for degree of settlement (constraintType)", "constraint strength (constraintLevel)", "directionality (direction)", "lower limit (min)" of price width, and "upper limit (max)" of price width. These attributes are based on the contents respectively stored in the agreement type storage section 2, agreement level storage section 3 and directionality storage section 4. Furthermore, in regard to the attribute value of "value type for degree of settling" for the "price", the expression of this attribute value as continuous numerical values (numeric) is set beforehand. Furthermore, the setting of the attribute value of "constraint strength" for the price as "strong constraint (absolute)", and the attribute values of "down", "67,000" and "70,000" which indicate "cheaply within a price range of 67,000 to 70,000", are described after the information input into the screen, etc., by the buyer has been converted to XML. For example, if there is sell order data that satisfies the constraint of "67,000 to 70,000", a high numerical value (score) is assigned to combinations with this sell order data as the sell order data approaches the above-described lower limit value of "67,000" (e.g., a score of "75" is assigned to combinations with sell order data indicating "want to sell at 68,000 yen"), while in cases where there is no sell order data that satisfies the above-described constraint, it is indicated that an agreement cannot be reached for this buy order data.

Furthermore, besides the above-described "down", other attribute values such as "downward" which indicates the lower limit value in the same manner as the above-described "down", "up (or) upward" which indicates the upper limit value, and "median" which indicates the center value of the range, etc., can be used as the above-described attribute values corresponding to "directionality (direction)". In addition, in cases where the lower limit of the range is normalized to zero and the upper limit is normalized to 1, for example, "specified 0.25", etc., which indicates a position of 0.25 can also be used.

Furthermore, the <time> element is constructed from the following plurality of attributes: namely, "value type for degree of settlement (constraintType)", "constraint strength (constraintLevel)", and "lower limit (min)" and "upper limit (max)" of delivery date. Here, the conditions relating to the delivery date ordered by the buyer contain conditions for two delivery dates, i.e., "by August 31, 2001 if possible, and absolutely by September 3, 2001 "; accordingly, the <time> element also has two parallel structures. First, in regard to the condition of "by August 31, 2001 if possible", a "boolean" attribute which indicates a binary value (1 or 0) as the attribute value of the "value type for degree of settlement" is set; furthermore, a "best-effort" attribute which indicates that the strength is a strength that requires a best effort is set as the attribute value of the "constraint strength". Furthermore, an "unbound" attribute which indicates that there is no limit (i.e. that delivery can be made any time from the date and time of processing on) is set for the "lower limit" of the deadline, and "2000-08-31" is set for the "upper limit" of this deadline. More specifically, in cases where there is sell order data that satisfies this constraint (delivery possible by August 31), the constraint is taken as settled, and a degree of settlement value of "1" is set. In cases where there is no sell order data that satisfies this constraint, it is assumed that the constraint could not be settled, and a degree of settlement value of "0" is set. Meanwhile, in regard to the condition of "absolutely by September 3", a "boolean" attribute is set as the attribute value of the "value type for the degree of settlement", and an "absolute" attribute which indicates an absolute constraint is set as the attribute value of the "constraint strength". The lower limit and upper limit of the deadline are set in the same manner as described above. More specifically, since this "September 3" is an absolute constraint, if there is no sell order data that allows delivery by this date, it is indicated that an agreement could not be reached for this buy order data.

Furthermore, besides being described each time that a buyer inputs transaction conditions, attribute values other than "constraintType" can be set beforehand as default values in cases where customer profile data has been prepared for this buyer, e.g., in cases where the above-described buyer has conducted transactions in this electronic marketplace in the past, etc., so that the effort required for user input is reduced. Furthermore, in regard to sell order data, since this data has a data structure that is more or less similar to that of the above-described buy order data, a description is omitted here.

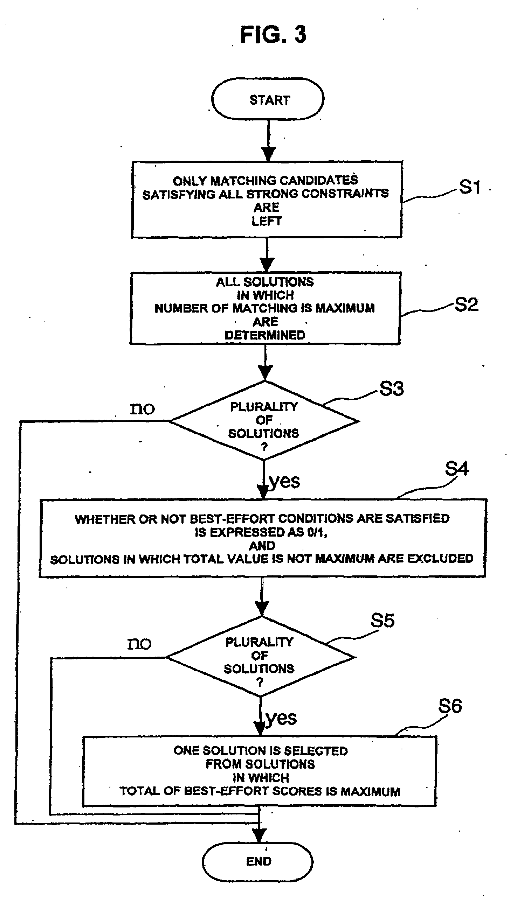

Sell order data Da and buy order data Db having such a structure are received by the order data receiving section 5 as described above, and are further output to the settlement processing section 7 by the order data output section 6. The settlement processing section 7 performs processing that settles the respective constraints of the above-described sell order data Da and buy order data Db, and causes agreements to be reached. Here, the operation of the settlement processing section will be briefly described with reference to the flow chart shown in Figure 3.

First, for respective input sell order data Da and buy order data Db, reference is made to the "constraint strength (constraintLevel)" of the respective constraint elements, and a selection is made so that only matching candidates that satisfy all of the constraints of the constraint elements that have the attribute value of "strong constraint (absolute)" are left (step S1). In this case, a settlement score is calculated for constraints in which the "value type for the degree of settlement (constraintType)" is "numeric". Then, all of the solutions (combinations) in which the matching number is maximum among the selected sell order data Da and buy order data Db are determined (step S2). Then, in cases where there is a single solution (step S3: no), an agreement is concluded for the sell order data Da and buy order data Db in this combination. Furthermore, in cases where there are a plurality of solutions (combinations) (step S3: yes), the fact of whether a settlement was made or not is expressed by a "boolean" attribute value (of the "value type for degree of settlement (constraintType)") of 1 or 0 for constraint elements that have an attribute value in which the "constraint strength (constraintLevel)" is "best-effort", and solutions (combinations) in which the total value of these constraint elements is not the highest value are excluded (step S4). In this stage, if there is data for which the solution (combination) is a single solution (step S5: no), an agreement is concluded for the sell order data Da and buy order data Db in such combinations. On the other hand, in cases where the solutions (combinations) are still a plurality of solutions (step S5: yes), a best-effort score comprised of a combination of the total of the settlement scores calculated in the above-described step S 1 and the number of solutions expressed as 1 or 0 in step S4 is calculated using (for example) the following equation:

$$\text{Best-effort score} = (\text{total of numeric type settlement scores} + \text{number of}$$

$$\text{boolean type settlements} \times 100) / \text{number of constraints}$$

Then, by selecting a single solution from solutions (combinations) showing the highest value, an agreement is concluded for the sell order data Da and buy order data in this combination (step S6).

The agreement result data Dc constituting the results of the processing of the settlement processing section 7 is stored in the agreement result storage section 8, and the fee collection information data Dd constituting information indicating the fee that is to be collected for the agreement is stored in the fee collection information storage section 9.

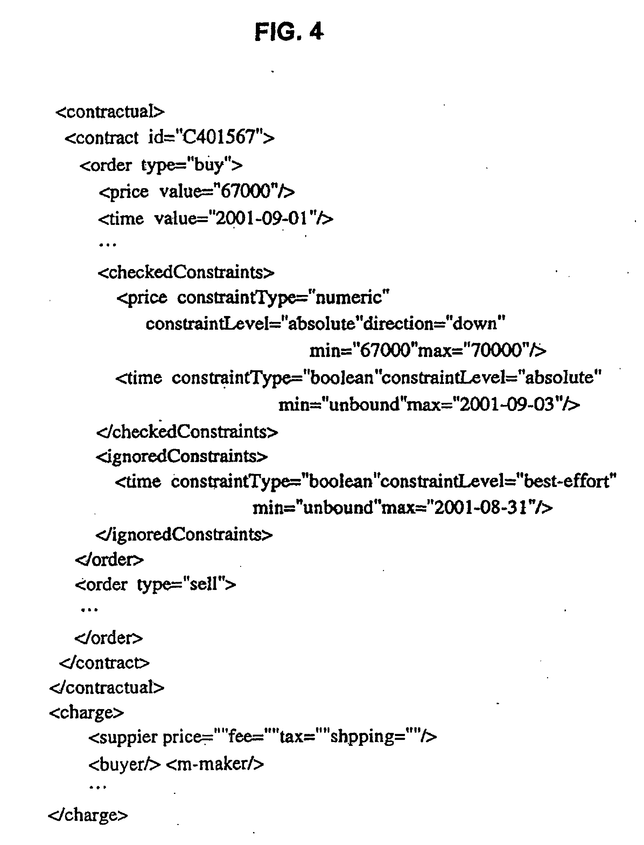

Here, Figure 4 shows one example of a data structure comprised of the stored agreement result data Dc and fee collection information data Dd. This data structure is shown for a case in which an agreement has been concluded for the buy order data Db shown in Figure 2. Figure 4 shows a state in which the agreement result data Dc and fee collection information data Dd are described in a single XML document. More specifically, this data structure is constructed mainly from a <contractual> element which expresses the agreement result data and a <charge> element which expresses the fee collection information data.

To describe this in detail, the <contractual> element has a structure in which an <order> element that indicates the buy order data (<order type = "buy">) and an <order> element that indicates the sell order data (<order type = "sell">) are described in parallel for each individual agreement result (agreement result ID). The buy order and sell order elements further have a construction in which a <price> element and <time> element ... constituting agreement results of each constraint, a <checkedConstrains> element which indicates the content of constraint elements settled in the agreement, and an <ignoredConstrains> element which indicates the content of constraint elements that were not settled (i.e., that were ignored), are described in parallel. For example, examining a case in which an agreement was concluded for the above-described buy order data under the conditions of "price 67,000, delivery date September 1, 2001", the agreement results are expressed as <price value = "67,000"/>, <time value = "2001-9-01"/>, as is shown in the same figure. Furthermore, in regard to the settled constraint <checkedConstrains> element, the price conditions constituting a strong constraint and absolute delivery data constituting a strong constraint shown in Figure 2 are respectively expressed in the <price> element and <time> element. On the other hand, in regard to the unsettled constraint <ignoredConstrains> element, since the condition of "August 31 if possible", which is a best-effort constraint, was not satisfied, this constraint is expressed in the <time> element. Furthermore, in regard to the elements of the sell conditions as well, settled constraints and constraints that were not settled are expressed in a similar manner; accordingly, a detailed graphic illustration and description are omitted.

Furthermore, in regard to the <charge> element, this element is constructed from a <supplier element>, a <buyer element> and an <m-maker> element respectively indicating information regarding fees that are to be charged to sellers, buyers and market managers, etc.

Furthermore, in the above-described first embodiment, combinations of attribute values corresponding to the "degree of settlement value type <constraintType>" and "constraint strength <constraintlevel>" for each constraint were described as three configurations, i.e., "numeric" and "absolute", "boolean" and "best-effort", and "boolean" and "absolute". Besides these configurations, however, configurations such as a combination of "numeric" and "best-effort", and "no designation of any attribute values", etc., are also permitted.

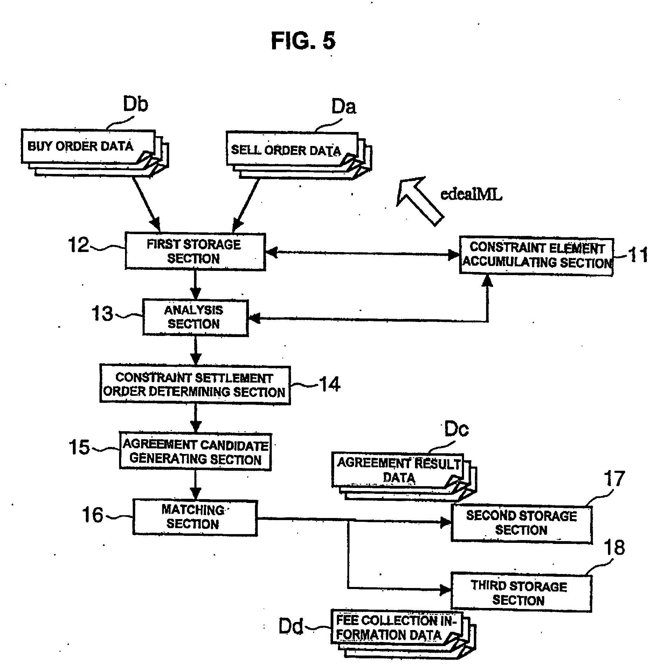

<Second Embodiment> Figure 5 is a block diagram which shows the functional construction of the transaction constraint settling device in the second embodiment of the present invention. This transaction constraint settling includes a constraint element accumulating section 11, a first storage section 12, an analysis section 13, a constraint settlement order determining section 14, an agreement candidate generating section 15, a matching section 16, a second storage section 17, and a third storage section 18. Here, the constraint element accumulating section 11 stores in a schema the names and structures of constraint elements (including attributes attached to these elements) such as "price", "delivery date", "quantity", "quality of product or service", "location (of delivery or shipping, etc.)" and "account settlement method", etc., defined for goods or services involved in transactions in the electronic marketplace. Furthermore, in this constraint element accumulating section 11, the definitions of value types for degree of settlement (agreement types) in cases where tentative agreements have been individually concluded for sell order data and buy order data, constraint strengths (agreement levels) used to settle constraints for each value type for degree of settlement designated for respective constraint elements, and directionality of the type described in the above-described first embodiment, etc., are accumulated in a schema. A specified language among various types of languages such as XML and SGML, etc., can be used as the language that describes these definitions. The first storage section 12 stores sell order data Da and buy order data Db received from the computers of buyers and sellers. Here, the sell order data Da and buy order data Db are based on a special language for electronic commercial transactions (indicated as "edealML" in the same figure) specified by the definitions of constraint elements, etc., accumulated in the constraint element accumulating section 11; in concrete terms, such order data has the data structure shown in Figure 2 in the above-described first embodiment. Furthermore, when sell order data Da and buy order data Db are input by respective sellers and buyers, the analysis section 13 analyzes and structuralizes the sell order data Da and buy order data Db stored in the first storage section 12 in accordance with the definitions accumulated in the constraint element accumulating section 11. The constraint settlement order determining section 14 determines the order of the constraint elements that are to be solved by assigning a priority order to the plurality of constraint elements respectively contained in the respective sell order data Da and buy order data Db. The agreement candidate generating section 15 settles constraints in the order determined by the constraint settlement order determining section 14 for a plurality of sell order data Da and a plurality of buy order data Db, and individually generates candidates (combinations) for agreement. The matching section 16 causes agreements to be concluded for sell order data Da and buy order data Db on a one-to-one basis from the agreement candidates generated by the constraint settlement order determining section 14. The second storage section 17 stores the agreement result data Dc produced by the processing of the matching section 16. The third storage section 18 stores charge information data Dd based on the above-described agreement results. Here, the data structure comprised of the stored agreement result data Dc and fee collection information data Dd is (for example) the data structure shown in Figure 4 in the above-described first embodiment.

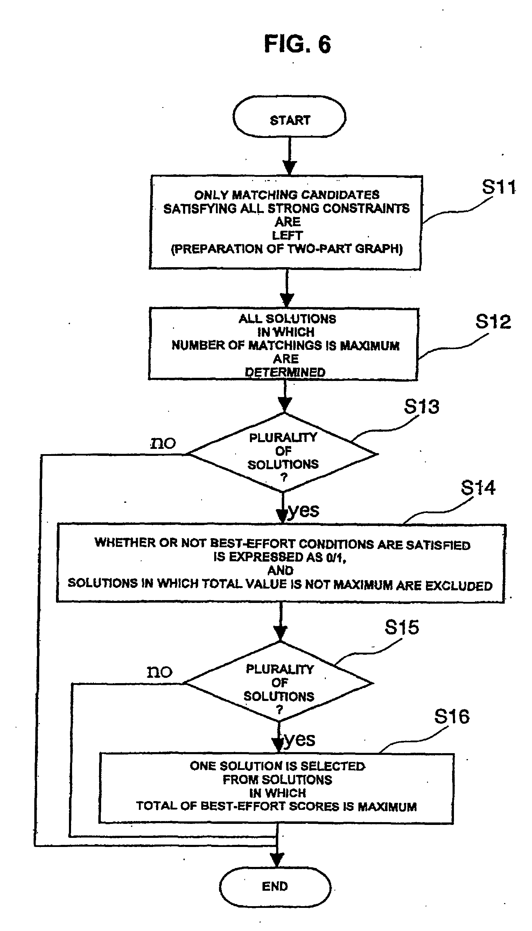

Next, a portion of the operation of this transaction constraint settling device will be described with reference to the flow chart shown in Figure 6. First, for the sell order data Da and buy order data Db received and stored by the first storage section 12 and analyzed by the analysis section 13, the order of the constraint elements that are to be settled is determined by the constraint settlement order determining section 14, and a selection is performed so that only matching candidates that satisfy all of the constraints of constraint element that have the attribute value of "strong constraint (absolute)" are left (step S11). Furthermore, the system can also be devised so that order data including constraint elements which rank low in the order of settlement are excluded. Next, for the matching candidates that satisfied all of the strong constraints in step S 11, all solutions (combinations) in which the number of matchings shows a maximum value are determined. In concrete terms, in cases where there are a plurality of constraint elements, it is preferable that processing be performed according to a program which performs "two-part graph preparation" processing, and sell order data Da and buy order data Db in which the constraint elements suit each other be combined.

Furthermore, in cases where there are still a plurality of solution even when a two-part graph is prepare, i.e., in cases where a certain set of sell order data Da or buy order data Db is combined with a plurality of sets of buy order data Db or sell order data Da, the constraint elements of, for example, "price" for these sets of data are compared with each other, and agreements are individually concluded for the sell order data Da and buy order data Db on a one-to-one basis in accordance with a specified algorithm. Here, the term "specified algorithm" refers to an algorithm which is devised so that (as a rule) the price of the buy order data Db is greater than the price of the sell order data (cases in which the prices agree are also included), and which is devised so that agreements are concluded between sets of data which are such that the monetary difference amounts between the prices of the buy order data Db and the prices of the sell order data Da show a maximum value, or so that in the case of a plurality of combinations, agreements are concluded between sets of data which are such that the monetary difference amounts approach a specified value.

In cases where sell order data Da and buy order data Db are matched on a one-to-one basis by means of such processing, i.e., in cases where there is a single solution (step S13: no), the system is devised so that an agreement is concluded for this sell order data Da and buy order data Db. On the other hand, in cases where there are a plurality of solutions even if the above-described algorithm is used (step S13: yes), the fact of whether a settlement was made or not is expressed by a "boolean" attribute value (of the "value type for degree of settlement (constraintType)") of 1 or 0 for constraint elements that have an attribute value in which the "constraint strength (constraintLevel)" is "best-effort", solutions (combinations) in which the total value of these constraint elements is not the highest value are excluded (step S14), and if there is data for which the solution (combination) is a single solution (step S5: no), an agreement is concluded for the sell order data Da and buy order data Db in such combinations, as in step S4 through step S6 in the flow chart (Figure 4) described in the above-described first embodiment. On the other hand, in cases where the solutions (combinations) are still a plurality of solutions (step S15: yes), one solution is selected from the solutions (combinations) in which the total of the best-effort scores shows a maximum value, so that an agreement is concluded for the sell order data Da and buy order data Db in this combination (step S16).

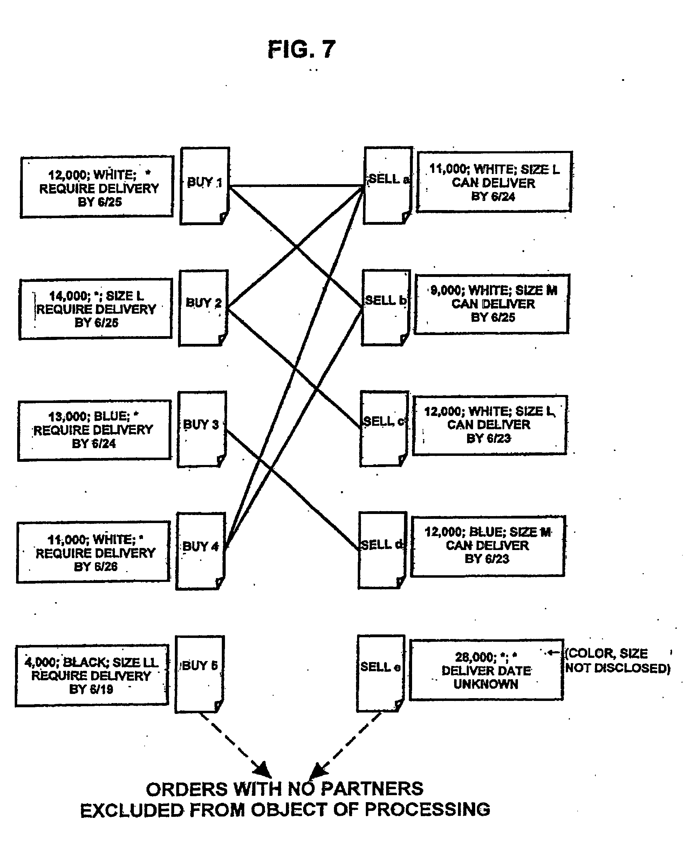

An example of a transaction using the above-described constraint element settlement method will be described in particular for the process extending from the determination of the order of the constraint elements that are settled, through the preparation of a two-part graph, and up to the point where agreement results are obtained, utilizing concrete examples shown in Figures 7 through 9.

This example represents a case in which a plurality of buyers and sellers conduct transactions regarding specified shoes of a certain maker. In the case of transactions involving these shoes, as is shown in Figure 7, the three constraint elements of "price", "quality" and "deadline" are set; furthermore, in regard to "quality", the two attributes of "color" and "size" are set. In Figures 7 through 9, the constraint elements (including attributes) for the sell order data (sell a, sell b, ...) and buy order data (buy 1, buy 2, ...) are indicated in the order "price", "color", "size" and "deadline" beside the respective data. Here, it is assumed that the constraint strengths of these constraint elements (including attributes) have been input by the respective buyers and sellers at the time of ordering so that these are set as strong constraints (absolute). Furthermore, in cases where a constraint element is indicated by "*", this indicates that the corresponding buyer or seller has not set a condition, i.e., that the buyer or seller desires to conduct a transaction without any particular limitation regarding the corresponding constraint element. Furthermore, it is assumed that the respective sets of sell order data and buy order data are in a state which completely prevents other parties from ascertaining the input constraints when the corresponding buyers and sellers input their own constraints.

Here, it is assumed that the five sets of buy order data and five sets of sell order data shown in Figure 7 are sets of order data for which the constraint elements have been settled (in a case where (for example) the "colors" of shoes for which transactions are possible include 100 colors, and buyers and sellers who desire to buy or sell shoes with the four attribute values of "white", "blue", "black" and "red" are numerous) after it has been determined in regard to "color" that the question of whether or not the shoes correspond to the four colors described above is the constraint element that is to be settled first. Then, when two-part graph preparation processing is performed for the above-described order data, it is seen that the respective constraint elements are settled by combinations connected by straight lines in the same figure. More specifically, combinations of "buy 1" with "sell a" and "sell b", "buy 2" with "sell a" and "sell c", "buy 3" with "sell d", and "buy 4" with "sell a" and "sell b" are respectively selected as matching candidates. Furthermore, in regard to "buy 5" and "sell e", since there are no partners for which the constraint elements are settled, these sets of data are excluded as objects of the current agreement processing. Furthermore, excluded order data can be presented as candidates in the next round of agreement processing.

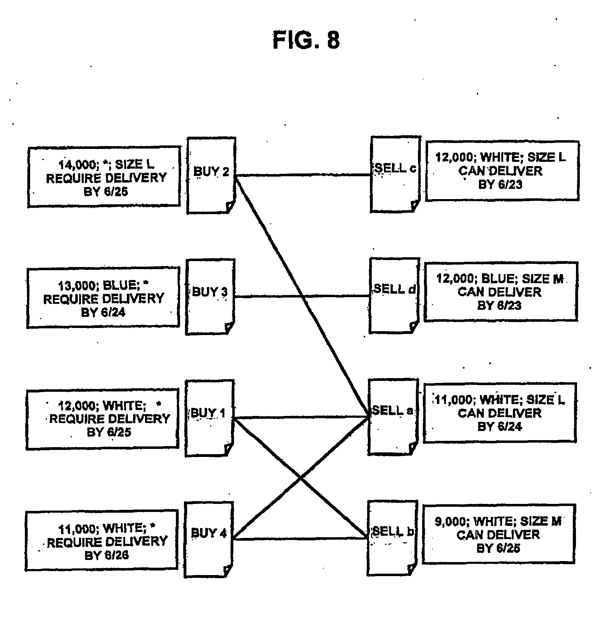

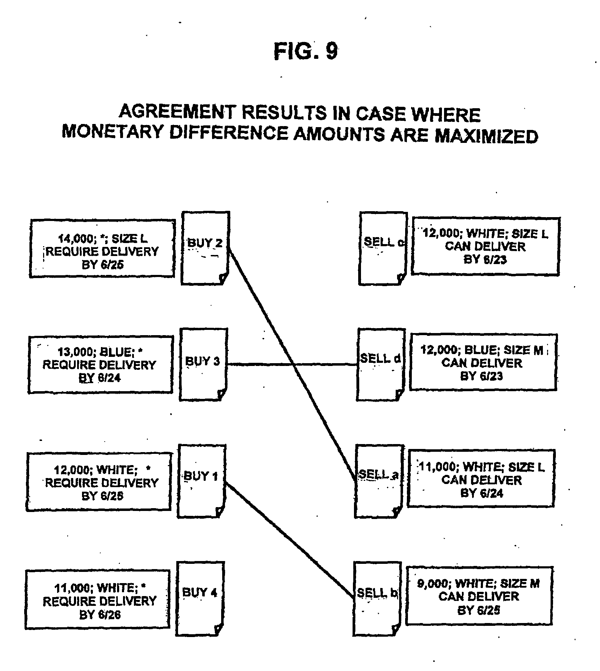

Next, as is shown in Figure 8, while the combinations resulting from the above-described two-part graph preparation are maintained, the respective sets of buy order data and sell order data are rearranged in price order with the highest prices first. Then, as is shown in Figure 9, agreements are concluded for buy order data and sell order data on a one-to-one basis, here according to an algorithm which is devised so that the monetary difference amounts between the buy order data and sell order data show a maximum value. In concrete terms, agreements are concluded for "buy 2" and "sell a", "buy 3" and "sell d", and "buy 1" and "sell b". Since "buy 4" and "sell c" are not connected by a straight line, no agreement is concluded in this case. Thus, agreement results that satisfy the constraints submitted by the respective buyers and sellers are obtained; here, however, if attention is given to the prices of the sets of order data for which agreements have been reached, it is seen that the price of the buy order data is higher than the price of the sell order data for all of the combinations. More specifically, since agreements can be concluded even when the prices do not match, the number of agreements can be greatly increased compared to a conventional agreement system that depends on price matching (there may also be cases in which the submitted prices have a width). Furthermore, since the prices at which agreements are reached are the prices submitted by the respective buyers and sellers themselves, the respective parties can conduct transactions at mutually agreeable prices. Moreover, since the constraints are in a state which prevents competitors and future agreement partners from ascertaining the constraint conditions when the buyers and sellers input their own constraints, no feeling of unfairness is created in the agreements. Furthermore, if the system is devised so that the conditions submitted by the respective parties are not disclosed to other parties even after agreements have been successfully concluded, the generation of feelings of unfairness is eliminated to an even greater extent, so that the occurrence of excessive competition in subsequent transactions can also be eliminated.

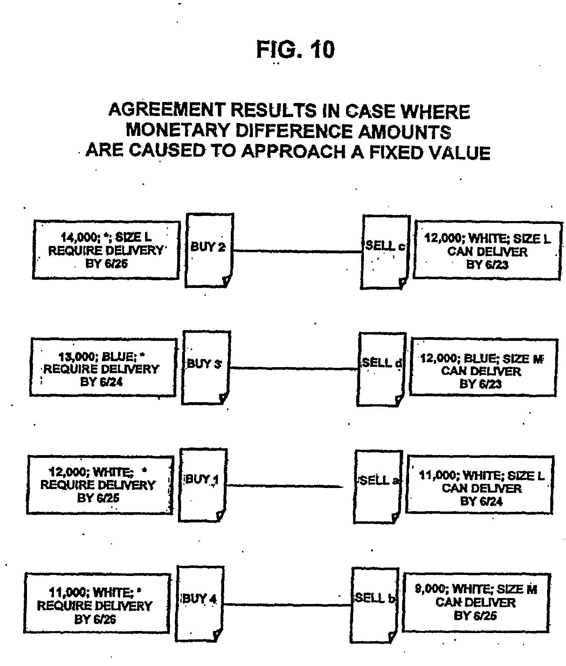

Furthermore, in the above-described concrete example, the agreement results are not limited to those shown in Figure 9. For example, if an algorithm which causes agreements to be concluded so that the monetary difference amounts between the prices of buy order data and sell order data are caused to approach a fixed value for respective agreement results, the four sets of agreement results shown in Figure 10 can be obtained, so that a larger number of transactions can be successfully completed than in the case shown in Figure 9. Furthermore, the above description concerns a case in which the system is devised so that buy order data is used as a reference, and agreements are concluded with sell order data; besides this, however, if a method in which sell order data is used as a standard, or in which the data is rearranged in descending order with regard to price, etc., is used, there can be cases in which agreement results that differ from those shown in Figures 9 and 10 are obtained.

Furthermore, when matching candidates are generated, various algorithms such as a "weighted two-part graph maximum matching calculation" algorithm using graph logic, etc., can be used besides the above-described algorithm based on basic two-part graph preparation logic.

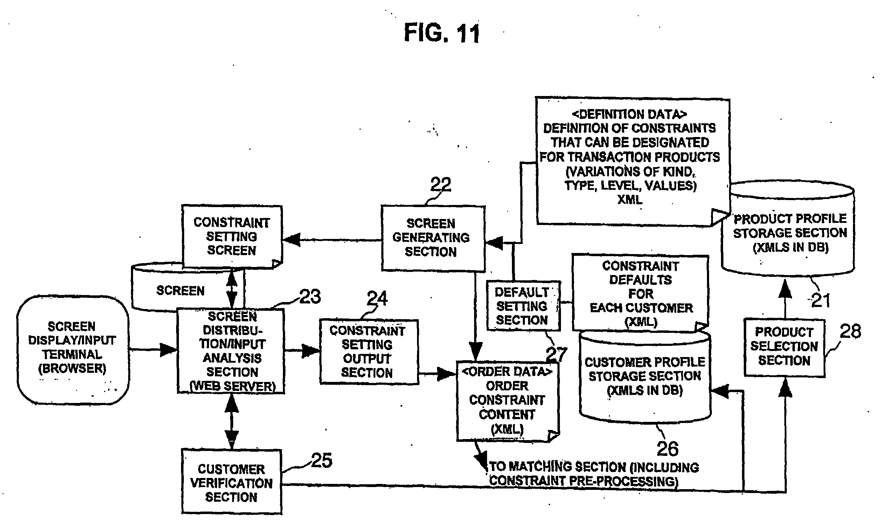

<Third Embodiment> Figure 11 is a block diagram which shows the functional construction of a device comprised of a transaction constraint settlement supporting device and a transaction constraint settling device in the third embodiment of the present invention. This device includes, among others, a product profile storage section 21, a screen generating section 22, a screen distribution/input analysis section 23, a constraint setting output section 24, a customer verification section 25, a customer profile storage section 26, a default setting section 27 and a product selection section 28.

The product profile storage section 21 stores a definition data file which defines types of constraints (names, etc.), value types for degree of settlement of constraints (constraintType), strengths of constraints (constraintLevel), and variations of degree of settlement values and constraint strengths (numeric or boolean, absolute or best-effort, etc.) and the like that can be designated for each product (or service) involved in a transaction. It is desirable that this definition data file be formed as an XML document; however, this file is not necessarily limited to such a document. The screen generating section 22 generates a constraint setting screen that constitutes a user interface for terminal computers used by buyers and sellers (customers) on the basis of the above-described definition data. The screen distribution/input analysis section 23 transmits the generated constraint setting screen to the terminal computers of the customers and receives constraint contents that are input for each customer. The screen distribution/input analysis section 23 also functions as an interface output section and order data read-in section in the present invention. In concrete terms, this function can be realized by means of a general web server, etc. Furthermore, the system can also be devised so that the customers cause the above-described constraint setting screen to be displayed on a general browser in the terminal computers, and input or transmit necessary items such as constraint contents, etc. The constraint setting output section 24 analyzes the above-described analyzed constraint contents on the basis of the above-described definition data, converts these contents into order data that is described by XML, and outputs this data to the matching section that causes agreements to be concluded for the buy and sell order data.

Furthermore, the customer verification section 25 verifies customers by means of ID or passwords, etc., for each customer in cases where access requests are received from the browsers of the customers. The customer profile storage section 26 prepares and stores profiles for each customer on the basis of the constraint contents input by verified customers. The default setting section 27 sets constraint defaults for each customer on the basis of the above-described stored customer profiles, and prepares a constraint default file (preferably an XML document). In this system, a constraint setting screen is generated for each customer in the screen generating section 22 on the basis of the contents of both the above-described constraint default file and the above-described definition data file. As a result, in cases where a customer accesses the system from the second time on, a screen in which default values based on the transaction contents up to the previous time are described beforehand can be used; accordingly, if there are no differences in the transaction contents, transaction contents can be input using fewer operations. Furthermore, the product selection section 28 receives transaction products selected by customers who have been verified by the customer verification section 25. Then, if constraint screens for the selected products are devised so that constraint screens that are specified for these products based on the definition data for products stored in the product profile storage section 21 are generated in the screen generating section 22, the convenience that is afforded when customers input constraint contents can be improved even further.

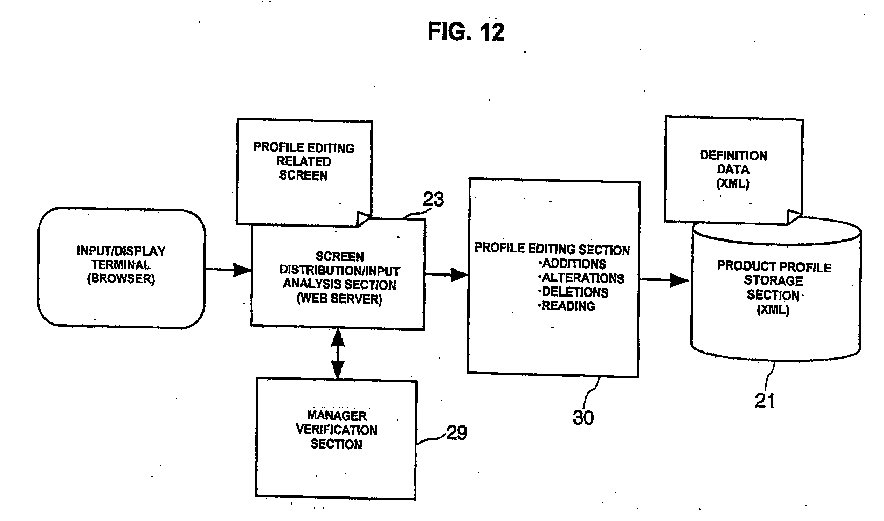

Furthermore, in cases where managers of the electronic marketplace (market) independently edit definition data for each of the products being handled, a transaction constraint settlement supporting device such as that shown in Figure 12 can be used. This transaction constraint settlement supporting device includes a product profile storage section 21, a screen distribution/input analysis section 23, a manager verification section 29, and a profile editing section 30. The product profile storage section 21 and screen distribution/input analysis section 23 have more or less the same functions as the corresponding parts shown in Figure 11. The manager verification section 29 verifies managers by means of ID or passwords for each manager in cases where access requests from the browsers, etc., of the managers' own computer terminals are received by the screen distribution/input analysis section (web server) 23. In cases where a profile editing related screen is displayed on the browser of a verified manager, the profile editing section 30 receives additions, alterations, deletions and readings requests, etc., for the product definition data that has been input into the screen, and edits the definition data. The edited definition data is re-stored in the product profile storage section 21. As a result, managers can access this transaction constraint settlement supporting device from external general computers; accordingly, the burden of individual direct management of product profiles (definition data) by managers can be reduced.

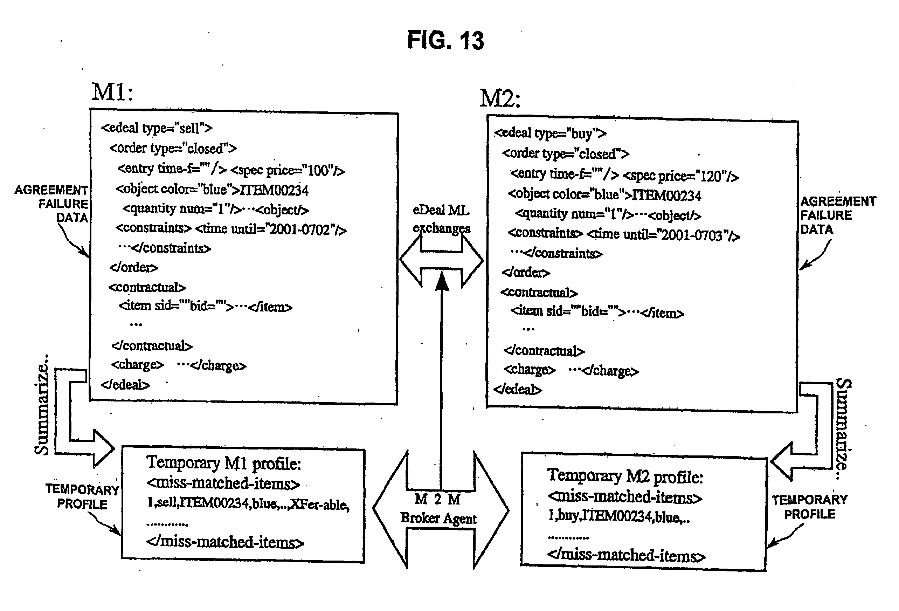

<Fourth Embodiment> Figure 13 shows the structural diagram of a transaction constraint settling system in this embodiment. In the same figure, M1 and M2 respectively indicate transaction supporting devices in different electronic marketplaces. Furthermore, "M2M BrokerAgent" is an agent device that is interposed between the transaction supporting devices M1 and M2. For example, each of transaction supporting devices M1 and M2 corresponds to the device described in the above-described first embodiment or second embodiment, and both of these devices can analyze and interpret a special language for electronic commercial transactions (eDealML) specified by XML which defines the constraints, etc., in the transactions. These devices have the function of causing agreements to be reached for respectively received buy order data and sell order data on the basis of the above-described eDealML.

In this system, the respective transaction constraint settling devices M1 and M2 prepare agreement failure data described by XML for order data for which agreements could not be reached. This agreement failure data comprises a data structure which has an <order> element that indicates the constraint contents involved in the above-described order data, a <contractual> element that indicates the agreement results (there can be cases in which not only data for which an agreement was reached, but also data for which an agreement was not reached, is included), and a <charge> element that indicates fee collection information, in parallel. Furthermore, the respective transaction constraint settling devices M1 and M2 prepare and store temporary profiles summarizing the contents on the basis of this agreement failure data. These temporary profiles can also be document files described by XML. Furthermore, the <order> element, <contractual> element and <charge> element in the above-described data structure can be respectively stored as independent files, or can be stored as independent records of a database. Moreover, the <order> element is an essential element, but the <contractual> element and <charge> element are additional elements; accordingly, order data that does not contain these last two elements can also be used. Furthermore, in the case of the <order> element, the definition part of the constraints, etc., and the concrete order part that has attributes based on these definitions can be stored as separate independent files.

Meanwhile, the agent device reads in the temporary profiles stored by the respective transaction constraint settling devices M1 and M2, and makes a judgment as to whether or not an agreement can be reached by the other of the respective transaction constraint settling devices for the order data based on the temporary profiles that have been read in. In cases where it is judged that an agreement is possible, the order data for which an agreement has not been reached is extracted from the transaction supporting device storing this order data, and this order data is transferred to the transaction supporting device which has been judged to be capable of reaching an agreement. As a result, the possibility of reaching an agreement is greatly increased compared to a case in which agreement processing is performed in only a single marketplace. Accordingly, this can also make a great contribution to more active utilization of the electronic marketplace.

The present invention is not limited to the respective embodiments described above. Various aspects are possible: e.g., the respective embodiments can be used in combination, and the concrete constructions of respective components can be altered in various ways within the limits that involve no departure from the spirit of the present invention.

Industrial Applicability

According to the present invention, as seen from the above, in the commercial transactions with diverse constraints which are such that ordering as buy and sell orders has conventionally been impossible in the electronic marketplace, the settlement of these constraints is possible. More specifically, even transactions with complicated conditions that were not suitable for the electronic marketplace in the past can be handled in the electronic marketplace. Furthermore, things that could not be accomplished by human or computer processing in the past can be realized. For example, products and services of different types and attributes involved in transactions can be simultaneously handled in the same electronic marketplace, and products and services for which agreements could not be reached in this electronic marketplace can be exchanged with other electronic marketplaces. Moreover, subsequent transactions can be conducted even more smoothly by preparing profiles for each customer and for each product or service that is handled.

**Claims**

1. A transaction constraint settling device for settling one or more constraints involved in transactions in electronic marketplace, said device comprising:

   a constraint element storage section which defines and stores one or more constraint elements respectively that are to be settled,
   an agreement type storage section which defines and stores, as attributes of each constraint element, value types for degree of settlement of respective constraint elements in cases where sell order data and buy order data received in accordance with said defined constraint elements have tentatively been agreed upon,
   an agreement level storage section which defines and stores, as attributes of each constraint element, strengths of constraints in cases where settlement processing is performed on the basis of a designated value type for degree of settlement designated in said agreement type storage section,
   an order data receiving section which receives sell order data and buy order data involved in transactions in accordance with said constraint elements, and
   an order data output section which outputs sell order data and buy order data received by said order data receiving section to a settlement processing section which performs processing that settles one or more constraints on the basis of value types for degree of settlement stored in said agreement type storage section and strengths of constraints stored in said agreement level storage section.

2. A transaction constraint settling device for settling one or more constraints involved in transactions in electronic marketplace, said device comprising

   a constraint element storage section which defines and stores one or more constraint elements respectively that are to be settled,
   an agreement type storage section which defines and stores, as attributes of each constraint element, value types for degree of settlement of respective constraint elements in cases where sell order data and buy order data received in accordance with said constraint elements stored in said constraint element storage section have tentatively been agreed upon, and
   an agreement level storage section which defines and stores, as attributes of each constraint element, strengths of constraints in cases where settlement processing is performed on the basis of a designated value type for degree of settlement stored in said agreement type storage section.

3. The transaction constraint settling data device according to Claim 1 or 2, wherein value types for degree of settlement that are stored in said constraint type storage section take either multi-value or binary values for said degree of settlement.

4. The transaction constraint settling data device according to any one of Claims 1 through 3, wherein constraint strengths stored in said constraint level storage section take constraint level values of either strong constraints that express absolute constraints or best-effort constraints that express desired constraints.

5. The transaction constraint settling device according to any one of Claims 1 through 4, further comprising a directionality storage section which defines and stores a directionality that determines said values for a degree of settlement as attributes of constraint element in cases where at least one constraint element has a specified permissible width, wherein a directionality stored in said directionality storage section takes a value within said specified width.

6. The transaction constraint settling device according to any one of Claims 1 through 5, further comprising an agreement result storage section which stores agreement result data that indicates:

results of settlement of constraints and conclusion of agreements in accordance with value types for degree of settlement stored in said agreement type storage section, and constraint strengths stored in said agreement level storage section.

7. The transaction constraint settling device according to any one of Claims 1 through 6, further comprising a fee collection information storage section which stores fee collection information data that indicates information regarding fee collection in cases where constraints are settled and agreements are concluded in accordance with value types for degree of settlement stored in said agreement type storage section and constraint strengths stored in said agreement level storage section.

8. A transaction constraint settling device comprising:

a constraint element accumulating section which accumulates definitions of one or more constraint elements required for agreements involved in transactions in electronic marketplace; a first storage section which stores buy order data and sell order data which are

described by a language that can distinguish and describe character data and added information that is added to said character data, and received using a special language for electronic commercial transactions specified by definitions of constraint elements accumulated by said constraint element accumulating section;

an analysis section which analyzes buy order data and sell order data stored by said first storage section in accordance with definitions of said constraint elements; and an agreement candidate generating section which generates candidates for reaching agreements for buy order data and sell order data analyzed by said analysis section in accordance with definitions of said constraint elements.

9. A transaction constraint settling device comprising:

a constraint element accumulating section which accumulates definitions of one or more constraint elements required for agreements involved in transactions in electronic marketplace; a first storage section which stores buy order data and sell order data which are

described using a language that is capable of describing names and structures of elements comprised of tags and character data surrounded by tags, and received on the basis of a special language for electronic commercial transactions specified by definitions of constraint elements accumulated by said constraint element accumulating section;

an analysis section which analyzes said buy order data and sell order data stored by said first storage section in accordance with definitions of said constraint elements; and an agreement candidate generating section which generates candidates for reaching agreements for buy order data and sell order data analyzed by said analysis section, in accordance with definitions of said constraint elements.

10. The transaction constraint settling device according to Claim 8 or 9, wherein said constraint element accumulating section accumulates, at least:

one or more constraint elements that are to be settled, value types for degree of settlement of respective constraint elements which are defined as attributes of each of said constraint elements and in cases where a tentative agreement has been reached for sell order data and buy order data received in accordance with said constraint elements, and constraint strengths which are defined as attributes of each of said constraint elements and used to perform analysis processing on the basis of said value types for degree of settlement.

11. The transaction constraint settling device according to any one of Claims 8 through 10, further comprising a constraint settlement order determining means that determines a settlement order of constraint elements or attributes that are to be settled among:

one or more constraint elements,
one or more attributes contained in constraint elements, or
one or more constraint elements containing one or more attributes.

**12.** The transaction constraint settling device according to any one of Claims 8 through 11, further comprising:

a matching section which, in accordance with said defined constraint elements, performs processing that causes agreements to be reached for buy order data and sell order data generated by said agreement candidate generating section; and
a second storage section which stores at least buy order data and sell order data for which agreements have been reached by said matching section.

**13.** The transaction constraint settling device according to any one of Claims 8 through 12, wherein said second storage section stores, after distinguishing, constraint elements that were used or constraint elements that were not used, among constraint elements in a processing of at least said agreement candidate generating section or matching section.

**14.** The transaction constraint settling device according to any one of Claims 8 through 13, further comprising a third storage section which stores fee collection information indicative of information regarding fees that are to be collected when constraints are settled and agreements are reached on the basis of processing of said matching section.

**15.** The transaction constraint settling device according to any one of Claims 8 through 14, wherein said first storage section stores data that is received in a state in which buyers and sellers who have submitted buy order data and sell order data cannot ascertain data submitted by other parties.

**16.** The transaction constraint settling device according to any one of Claims 8 through 15, wherein said matching section causes agreements to be reached for buy order data and sell order data even in cases where price that is one of constraint elements contained in buy order data and price that is one of constraint elements contained in sell order data are disagree.

**17.** A transaction constraint settling data structure, wherein said transaction constraint settling data structure comprises at least a first data section which stores, at least,

definitions of one or more constraint elements required for agreements involved in transactions in electronic marketplace,
value types for degree of settlement of respective constraint elements, which is defined as attributes of each of said constraint elements, in cases where tentative agreements have been reached for sell order data and buy order data received in accordance with said constraint elements, and
constraint strengths which are defined as attributes of each of said constraint elements and which are used when settlement processing is performed on the basis of said value types for degree of settlement, and
said first data section is constructed so that buy order data and sell order data received on the basis of said definitions of constraints, value types for degree of settlement and constraint strengths can be additionally stored; and
said transaction constraint settling data structure further comprises a second data section and/or a third data section that can be additionally provided, wherein
said second data section stores agreement results for buy order data and sell order data for which agreements have been reached in accordance with
degree of settlement of agreement type definition data, and
settlement conditions of agreement level definition data in said first data section; and
said third data section stores fee collection information regarding fees that are to be collected upon said agreements.

**18.** A transaction constraint settling device comprising:

an order data read-in section which reads in at least sell order data or buy order data involved in transactions in electronic marketplace,

a definition data storage section which stores definition data comprised of definitions of constraint elements, value types for degree of settlement and constraint strengths in at least said first data section in said transaction constraint settling data structure of Claim 17, and
an order data output section which:

analyzes order data read in by said order data read-in section on the basis of said definition data stored in said definition data storage section, and
outputs order data to a matching section that causes agreements to be reached for sell order data and buy order data.

19. A transaction constraint settlement supporting device comprising:

an interface generating section which generates a transaction receiving interface used to receive transaction contents of transactions in electronic marketplace on the basis of definition data comprised of definitions of constraint elements, value types for degree of settlement and constraint strengths in at least said first data section in said transaction constraint settling data structure of Claim 17,
an interface output section which outputs said transaction receiving interface generated by said interface generating section, and
a data conversion section which converts transaction content data inputted on the basis of said transaction receiving interface outputted by said interface output section into a transaction content data file in accordance with said definition data.

20. The transaction constraint settlement supporting device according to Claim 19, wherein said transaction constraint settlement supporting device further comprises:

a customer profile storage section which prepares and stores customer profile data for individual buyers or sellers who are customers in transactions on the basis of transaction data contents for said transactions received by said transaction receiving interface, and
a default setting section which sets default definition data for each customer for some of or all of said definition data on the basis of said customer profile data stored in said customer profile storage section; and

said interface generating section generates a transaction receiving interface on the basis of said definition data and default definition data.

21. A transaction constraint settling device, further comprising:

a transaction content data receiving section which receives transaction content data for transactions in electronic marketplace prepared on the basis of definitions of constraint elements in at least said first data section in said transaction constraint settling data structure of Claim 17, and
a transaction content data storage section which stores transaction content data received by said transaction content data receiving section.

22. A transaction constraint settling system comprising a plurality of transaction constraint settling devices and an agent device, wherein
each of said plurality of transaction constraint settling devices for respective electronic marketplaces comprises:

an order data receiving section which receives order data that is prepared and received on the basis of definitions of constraint elements in at least said first data section in said transaction constraint settling data structure of Claim 17,
an order data storage section which stores order data received by said order data receiving section,
a matching section which performs processing that causes agreements to be reached for order data stored in said order data storage section in accordance with said definitions of constraint elements in said first data section,
an agreement failure data storage section which stores order data for which an agreement was not reached in said matching section, and
a profile storage section which stores a temporary profile based on said order data stored in said agreement failure data storage section; and

each of said plurality of transaction constraint devices is capable of analyzing a transaction content data/ transaction constraint data structure in electronic marketplace, and

said agent device has:

a judgment function that reads in said profiles stored in said profile storage sections of said transaction constraint settling devices and makes a judgment as to whether or not an agreement can be reached by another transaction constraint settling device for order data based on a read-in profile, and

a data transfer function that extracts order data from said agreement failure data of said transaction constraint settling devices in cases where it is judged by said judgment function that an agreement can be reached for said order data by another transaction constraint settling device, said data transfer function further transferring said order data to an order data receiving section of said other transaction constraint settling device.

FIG. 1

EP 1 408 434 A1

## FIG. 2

### BUY ORDER DATA Db

```
<order type="buy"id="B401321">
   <price constraintType="numeric"
    constraintLevel="absolute"direction="down"
            min="67000"max="70000"/>
   </price>
   <time constraintType="boolean"
    constraintLevel="best-effort"
            min="unbound"max="2001-08-31"/>
   <time constraintType= "boolean"
    constraintLevel="absolute"
            min="unbound"max="2001-09-03"/>
   </time>

   ....
</order>
```

EP 1 408 434 A1

## FIG. 3

```
                    ┌─────────────┐
                    │    START    │
                    └─────────────┘
                           │
                           ▼
          ┌──────────────────────────────────┐
          │      ONLY MATCHING CANDIDATES     │        S1
          │  SATISFYING ALL STRONG CONSTRAINTS│
          │               ARE                 │
          │              LEFT                 │
          └──────────────────────────────────┘
                           │
                           ▼
          ┌──────────────────────────────────┐
          │          ALL SOLUTIONS            │
          │            IN WHICH               │        S2
          │  NUMBER OF MATCHING IS MAXIMUM    │
          │              ARE                  │
          │          DETERMINED               │
          └──────────────────────────────────┘
                           │
                           ▼
                        ╱──────╲                S3
               no      ╱ PLURALITY ╲
          ◄───────────◄    OF      ◄
                       ╲ SOLUTIONS ╱
                        ╲    ?   ╱
                         ╲──────╱
                           │ yes                     S4
                           ▼
    ┌────────────────────────────────────────────────────┐
    │  WHETHER OR NOT BEST-EFFORT CONDITIONS ARE SATISFIED│
    │              IS EXPRESSED AS 0/1,                   │
    │                     AND                             │
    │  SOLUTIONS IN WHICH TOTAL VALUE IS NOT MAXIMUM ARE EXCLUDED│
    └────────────────────────────────────────────────────┘
                           │
                           ▼
                        ╱──────╲                S5
               no      ╱ PLURALITY ╲
          ◄───────────◄    OF      ◄
                       ╲ SOLUTIONS ╱
                        ╲    ?   ╱
                         ╲──────╱
                           │ yes                     S6
                           ▼
          ┌──────────────────────────────────┐
          │     ONE SOLUTION IS SELECTED      │
          │        FROM SOLUTIONS            │
          │            IN WHICH              │
          │  TOTAL OF BEST-EFFORT SCORES IS MAXIMUM│
          └──────────────────────────────────┘
                           │
                           ▼
                    ┌─────────────┐
                    │     END     │
                    └─────────────┘
```

# FIG. 4

```
<contractual>
  <contract id="C401567">
    <order type="buy">
      <price value="67000"/>
      <time value="2001-09-01"/>
      ...

      <checkedConstraints>
        <price constraintType="numeric"
           constraintLevel="absolute"direction="down"
                              min="67000"max="70000"/>
        <time constraintType="boolean"constraintLevel="absolute"
                           min="unbound"max="2001-09-03"/>
      </checkedConstraints>
      <ignoredConstraints>
        <time constraintType="boolean"constraintLevel="best-effort"
                           min="unbound"max="2001-08-31"/>
      </ignoredConstraints>
    </order>
    <order type="sell">
     ...
    </order>
  </contract>
</contractual>
<charge>
    <suppier price=""fee=""tax=""shpping=""/>
    <buyer/> <m-maker/>
     ...
</charge>
```

## FIG. 5

EP 1 408 434 A1

# FIG. 6

```
                    ┌──────────┐
                    │  START   │
                    └────┬─────┘
                         │
                         ▼
        ┌────────────────────────────────┐      S11
        │     ONLY MATCHING CANDIDATES    │
        │ SATISFYING ALL STRONG CONSTRAINTS│
        │               ARE               │
        │              LEFT               │
        │  (PREPARATION OF TWO-PART GRAPH)│
        └────────────────┬───────────────┘
                         │
                         ▼
        ┌────────────────────────────────┐      S12
        │          ALL SOLUTIONS          │
        │             IN WHICH            │
        │  NUMBER OF MATCHINGS IS MAXIMUM │
        │               ARE               │
        │            DETERMINED           │
        └────────────────┬───────────────┘
                         │
                         ▼
                      ◇ PLURALITY ◇         S13
          no  ────────◇    OF     ◇
                      ◇ SOLUTIONS ◇
                      ◇     ?     ◇
                         │ yes
                         ▼                   S14
    ┌───────────────────────────────────────────────────┐
    │ WHETHER OR NOT BEST-EFFORT CONDITIONS ARE SATISFIED │
    │             IS EXPRESSED AS 0/1,                    │
    │                     AND                             │
    │ SOLUTIONS IN WHICH TOTAL VALUE IS NOT MAXIMUM ARE EXCLUDED │
    └───────────────────────┬───────────────────────────┘
                            │
                            ▼                S15
                         ◇ PLURALITY ◇
              no  ───────◇    OF     ◇
                         ◇ SOLUTIONS ◇
                         ◇     ?     ◇
                            │ yes
                            ▼              S16
            ┌───────────────────────────────────┐
            │      ONE SOLUTION IS SELECTED      │
            │          FROM SOLUTIONS           │
            │             IN WHICH              │
            │  TOTAL OF BEST-EFFORT SCORES IS MAXIMUM │
            └────────────────┬──────────────────┘
                             │
                             ▼
                      ┌──────────┐
                      │   END    │
                      └──────────┘
```

# FIG. 7

| BUY | | SELL |
|---|---|---|
| 12,000; WHITE; * REQUIRE DELIVERY BY 6/25 — BUY 1 | | SELL a — 11,000; WHITE; SIZE L CAN DELIVER BY 6/24 |
| 14,000; *; SIZE L REQUIRE DELIVERY BY 6/25 — BUY 2 | | SELL b — 9,000; WHITE; SIZE M CAN DELIVER BY 6/25 |
| 13,000; BLUE; * REQUIRE DELIVERY BY 6/24 — BUY 3 | | SELL c — 12,000; WHITE; SIZE L CAN DELIVER BY 6/23 |
| 11,000; WHITE; * REQUIRE DELIVERY BY 6/26 — BUY 4 | | SELL d — 12,000; BLUE; SIZE M CAN DELIVER BY 6/23 |
| 4,000; BLACK; SIZE LL REQUIRE DELIVERY BY 6/19 — BUY 5 | | SELL e — 26,000; *; * DELIVER DATE UNKNOWN ← (COLOR, SIZE NOT DISCLOSED) |

## ORDERS WITH NO PARTNERS
## EXCLUDED FROM OBJECT OF PROCESSING

# FIG. 8

# FIG. 9

## AGREEMENT RESULTS IN CASE WHERE
## MONETARY DIFFERENCE AMOUNTS ARE MAXIMIZED

14,000; *; SIZE L
REQUIRE DELIVERY
BY 6/25
BUY 2

13,000; BLUE; *
REQUIRE DELIVERY
BY 6/24
BUY 3

12,000; WHITE; *
REQUIRE DELIVERY
BY 6/25
BUY 1

11,000; WHITE; *
REQUIRE DELIVERY
BY 6/26
BUY 4

SELL c
12,000; WHITE; SIZE L
CAN DELIVER
BY 6/23

SELL d
12,000; BLUE; SIZE M
CAN DELIVER
BY 6/23

SELL a
11,000; WHITE; SIZE L
CAN DELIVER
BY 6/24

SELL b
9,000; WHITE; SIZE M
CAN DELIVER
BY 6/25

# FIG. 10

### AGREEMENT RESULTS IN CASE WHERE MONETARY DIFFERENCE AMOUNTS ARE CAUSED TO APPROACH A FIXED VALUE

| 14,000; *; SIZE L REQUIRE DELIVERY BY 6/25 | BUY 2 | — | SELL c | 12,000; WHITE; SIZE L CAN DELIVER BY 6/23 |

| 13,000; BLUE; * REQUIRE DELIVERY BY 6/24 | BUY 3 | — | SELL d | 12,000; BLUE; SIZE M CAN DELIVER BY 6/23 |

| 12,000; WHITE; * REQUIRE DELIVERY BY 6/25 | BUY 1 | — | SELL a | 11,000; WHITE; SIZE L CAN DELIVER BY 6/24 |

| 11,000; WHITE; * REQUIRE DELIVERY BY 6/26 | BUY 4 | — | SELL b | 9,000; WHITE; SIZE M CAN DELIVER BY 6/25 |

# FIG. 11

EP 1 408 434 A1

FIG. 12

INPUT/DISPLAY
TERMINAL
(BROWSER)

PROFILE EDITING
RELATED
SCREEN

23

SCREEN
DISTRIBUTION/INPUT
ANALYSIS SECTION
(WEB SERVER)

MANAGER
VERIFICATION
SECTION

29

PROFILE EDITING SECTION
·ADDITIONS
·ALTERATIONS
·DELETIONS
·READING

30

DEFINITION
DATA
(XML)

PRODUCT PROFILE
STORAGE
SECTION
(XML)

21

EP 1 408 434 A1

## FIG. 13

**M1:**

```
<edeal type="sell">
  <order type="closed">
    <entry time-f=""/> <spec price="100"/>
    <object color="blue">ITEM00234
      <quantity num="1"/>···<object/>
    <constraints> <time until="2001-0702"/>
    ···</constraints>
  </order>
  <contractual>
    <item sid=""bid="">···</item>
    ···
  </contractual>
  <charge> ···</charge>
</edeal>
```

**M2:**

```
<edeal type="buy">
  <order type="closed">
    <entry time-f=""/> <spec price="120"/>
    <object color="blue">ITEM00234
      <quantity num="1"/>···<object/>
    <constraints> <time until="2001-0703"/>
    ···</constraints>
  </order>
  <contractual>
    <item sid=""bid="">···</item>
    ···
  </contractual>
  <charge> ···</charge>
</edeal>
```

AGREEMENT FAILURE DATA

AGREEMENT FAILURE DATA

eDeal ML exchanges

*Summarize...*

*Summarize...*

TEMPORARY PROFILE

TEMPORARY PROFILE

Temporary M1 profile:
```
<miss-matched-items>
1,sell,ITEM00234,blue,..,XFer-able,
············
</miss-matched-items>
```

Temporary M2 profile:
```
<miss-matched-items>
1,buy,ITEM00234,blue,..
············
</miss-matched-items>
```

M 2 M Broker Agent

EP 1 408 434 A1

<table>
<tr><td colspan="2">**INTERNATIONAL SEARCH REPORT**</td><td>International application No.<br>PCT/JP02/02816</td></tr>
</table>

| A. CLASSIFICATION OF SUBJECT MATTER |
|---|
| Int.Cl$^7$ G06F17/60 |

According to International Patent Classification (IPC) or to both national classification and IPC

| B. FIELDS SEARCHED |
|---|

Minimum documentation searched (classification system followed by classification symbols)
Int.Cl$^7$ G06F17/60

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)
JICST FILE(JOIS), WPI, INSPEC(DIALOG)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 11-232352 A (Nippon Steel Corp.),<br>27 August, 1999 (27.08.99),<br>Full text; Figs. 1 to 24<br>& EP 1067471 A1 & WO 99/30259 A1 | 1–22 |
| A | JP 8-87509 A (Toshiba Corp.),<br>02 April, 1996 (02.04.96),<br>Full text; Figs. 1 to 6<br>(Family: none) | 1–22 |
| A | JP 9-179910 A (Fujitsu Ltd.),<br>11 July, 1997 (11.07.97),<br>Full text; Figs. 1 to 25<br>(Family: none) | 1–22 |
| A | JP 2001-43277 A (Kon/Feri International Futurestep Inc.),<br>16 February, 2001 (16.02.01),<br>Full text; Figs. 1 to 93 (Family: none) | 1–22 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>16 April, 2002 (16.04.02) | Date of mailing of the international search report<br>30 April, 2002 (30.04.02) |
|---|---|
| Name and mailing address of the ISA/<br>Japanese Patent Office | Authorized officer |
| Facsimile No. | Telephone No. |

Form PCT/ISA/210 (second sheet) (July 1998)